# DEMANDE DE BREVET EUROPEEN

(11) **EP 2 567 863 A1**
(43) Date de publication de la demande: **13.03.2013**
(21) Numéro de dépôt: 12183228.1
(22) Date de dépôt: 05.09.2012
(51) Int. Cl.: B60N 2/30, B60N 2/36, B60N 2/64

(54) **SIEGE DE VEHICULE AUTOMOBILE, COUSSIN DE DOSSIER D'UN TEL SIEGE ET PROCÉDÉ DER REALISATION D'UN TEL COUSSIN**

(30) Priorité: 06.09.2011 FR 1157886
(71) Demandeur: CENTRE D'ETUDE ET DE RECHERCHE POUR L'AUTOMOBILE (CERA), 51100 Reims (FR)
(72) Inventeur: Carpentier, Alain, 51390 Gueux (FR); Georges, Laurent, 08190 Roizy (FR); Brice, Patrick, 54110 Hudiviller (FR)
(74) Mandataire: Sayettat, Julien Christian

(57) **Abrégé**

L'invention concerne un siège (1) de véhicule automobile comprenant une assise (2) et un dossier (3) monté en rotation par un dispositif (4) d'articulation, ledit dossier comprenant un coussin (5) comprenant un bloc (6) de mousse de rembourrage revêtu d'une coiffe (7) de revêtement, ledit coussin comprend une cavité (8) latérale inférieure de logement dudit dispositif lorsque ledit dossier est rabattu, ladite cavité étant pourvue d'une ouverture (9), tournée vers l'avant, d'introduction dudit dispositif dans ladite cavité lors du rabattement dudit dossier, ladite ouverture étant pourvue d'un volet (10) d'occultation comprenant un premier bord (12) d'articulation et un deuxième bord (13) opposé, ledit coussin comprenant en outre un lien élastique (18) de rappel dudit volet en fermeture.

## Description

L'invention concerne un siège de véhicule automobile, un coussin d'un tel siège et un procédé de réalisation d'un tel coussin.

Il est connu de réaliser un siège de véhicule automobile comprenant une assise et un dossier monté en rotation par un dispositif d'articulation, ledit dispositif étant agencé pour permettre le rabattement dudit dossier en position sensiblement horizontale contre ladite assise, ledit dispositif saillant de ladite assise vers le haut lorsque ledit dossier est rabattu, ledit dossier comprenant un coussin de garniture, ledit coussin comprenant un bloc de mousse de rembourrage revêtu d'une coiffe de revêtement.

Le fait que le dispositif soit saillant de l'assise vers le haut lorsque le dossier est rabattu est notamment observé lorsque la cinématique de rabattement entraîne un mouvement de l'assise vers le bas, ceci afin d'agrandir l'espace de chargement du véhicule.

Lors du rabattement du dossier contre l'assise, le dispositif d'articulation est susceptible d'interférer avec le volume du coussin de dossier au niveau d'un coin inférieur dudit coussin.

C'est pourquoi on prévoit usuellement de réaliser en partie angulaire inférieure du coussin de dossier un évidement permettant de loger le dispositif lorsque le dossier est rabattu.

Une telle réalisation peut présenter une esthétique discutable dans la mesure où l'évidement est apparent.

L'invention a pour but de pallier cet inconvénient.

A cet effet, et selon un premier aspect, l'invention propose un siège de véhicule automobile comprenant une assise et un dossier monté en rotation par un dispositif d'articulation, ledit dispositif étant agencé pour permettre le rabattement dudit dossier en position sensiblement horizontale contre ladite assise, ledit dispositif saillant de ladite assise vers le haut lorsque ledit dossier est rabattu, ledit dossier comprenant un coussin de garniture, ledit coussin comprenant un bloc de mousse de rembourrage revêtu d'une coiffe de revêtement, ledit coussin comprenant une cavité latérale inférieure de logement dudit dispositif lorsque ledit dossier est rabattu, ladite cavité étant pourvue d'une ouverture, tournée vers l'avant, d'introduction dudit dispositif dans ladite cavité lors du rabattement dudit dossier, ladite ouverture étant pourvue d'un volet d'occultation comprenant un premier bord d'articulation et un deuxième bord opposé, ledit coussin comprenant en outre un lien élastique de rappel dudit volet en fermeture, ledit volet étant mobile entre :
- une première position correspondant au non rabattement dudit dossier où ledit volet occulte ladite ouverture sous l'action dudit lien, au moins une partie de la périphérie dudit volet s'appuyant en périphérie de ladite ouverture, ledit deuxième bord définissant avec ladite coiffe une fente,
- et une deuxième position correspondant au rabattement dudit dossier où ledit volet est ouvert par appui dudit dispositif contre lui, à l'encontre de la force de rappel exercée par ledit lien, ledit deuxième bord s'écartant pour ouvrir ladite fente.

Dans cette description, les termes de positionnement dans l'espace (haut, inférieur, latéral, avant, horizontal, vertical,...) sont pris en référence au siège disposé dans le véhicule avec son dossier non rabattu.

Avec l'agencement proposé, l'actionnement du dossier en rabattement conduit à une introduction du dispositif d'articulation dans la cavité, le volet s'écartant pour ouvrir la fente et permettre cette introduction.

Lorsque le dossier est relevé, le volet retrouve sa position naturelle en l'absence de contrainte et la cavité est masquée par le volet, la seule trace de présence de la cavité résidant dans une simple fente dans le coussin, ce qui améliore sensiblement l'esthétique du siège.

Le fait qu'au moins une partie de la périphérie du volet s'appuie en périphérie de l'ouverture permet d'empêcher une pénétration du volet dans l'ouverture lorsqu'il est fermé.

Selon d'autres aspects, l'invention propose un coussin d'un tel siège et un procédé de réalisation d'un tel coussin.

D'autres particularités et avantages de l'invention apparaîtront dans la description qui suit, faite en référence aux figures jointes dans lesquelles :

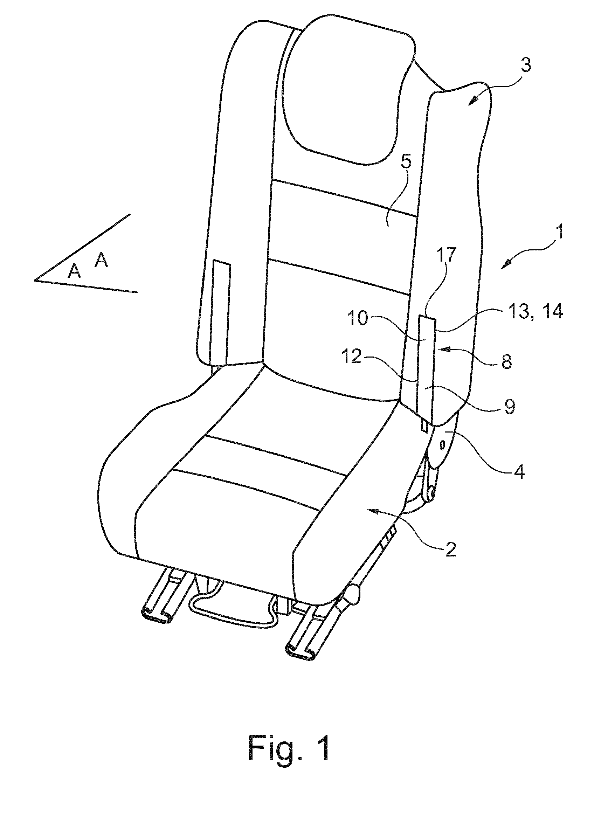

- la figure 1 est une vue en perspective d'un siège selon une réalisation, le dossier étant en position non rabattue,

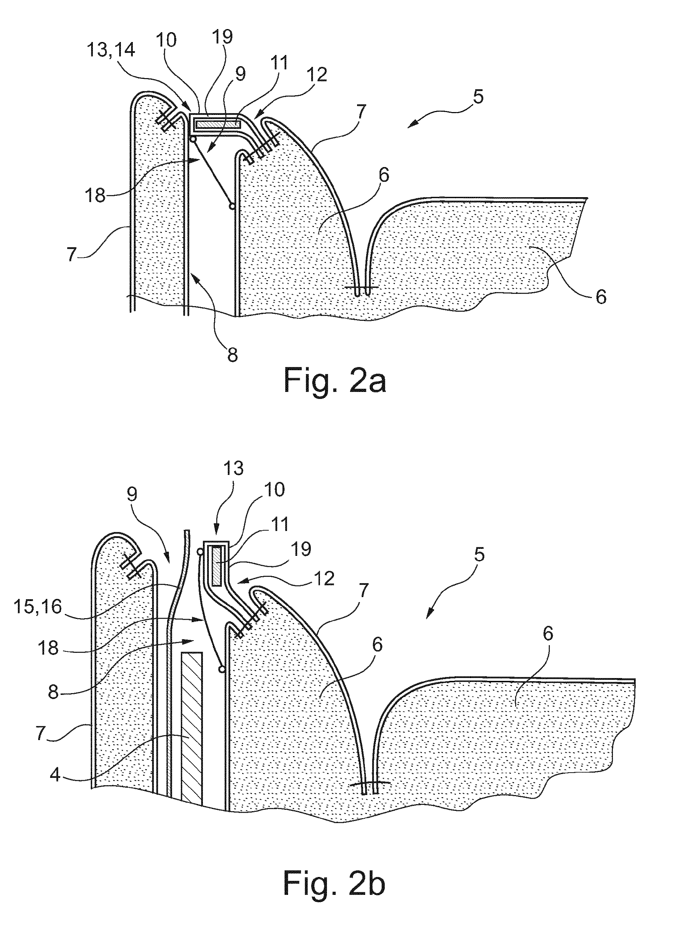

- la figure 2 est coupe schématique partielle d'un siège selon un plan AA (représenté en figure 1), ledit plan étant sensiblement horizontal lorsque le dossier est en position verticale, ledit plan suivant la rotation du dossier, le dossier étant en position non rabattue (2a) et en position rabattue (2b).

En référence aux figures, on décrit un siège 1 de véhicule automobile comprenant une assise 2 et un dossier 3 monté en rotation par un dispositif 4 d'articulation, ledit dispositif étant agencé pour permettre le rabattement dudit dossier en position sensiblement horizontale contre ladite assise, ledit dispositif saillant de ladite assise vers le haut lorsque ledit dossier est rabattu, ledit dossier comprenant un coussin 5 de garniture, ledit coussin comprenant un bloc 6 de mousse de rembourrage - notamment de polyuréthanne - revêtu d'une coiffe 7 de revêtement, ledit coussin comprenant une cavité 8 latérale inférieure de logement dudit dispositif lorsque ledit dossier est rabattu, ladite cavité étant pourvue d'une ouverture 9, tournée vers l'avant, d'introduction dudit dispositif dans ladite cavité lors du rabattement dudit dossier, ladite ouverture étant pourvue d'un volet 10 d'occultation comprenant un premier bord 12 d'articulation - ici sensiblement vertical - et un deuxième bord 13 opposé, ledit coussin comprenant en outre un lien élastique 18 de rappel dudit volet en fermeture, ledit volet étant mobile entre :
- une première position correspondant au non rabattement dudit dossier où ledit volet occulte ladite ouverture sous l'action dudit lien, au moins une partie de la périphérie dudit volet s'appuyant en périphérie de ladite ouverture, ledit deuxième bord définissant avec ladite coiffe une fente 14,
- et une deuxième position correspondant au rabattement dudit dossier où ledit volet est ouvert par appui dudit dispositif contre lui, à l'encontre de la force de rappel exercée par ledit lien, ledit deuxième bord s'écartant pour ouvrir ladite fente.

La coiffe 5 peut notamment être surmoulée par la mousse du bloc 6, selon le procédé décrit plus loin.

Selon la réalisation représentée, le volet 10 comprend un insert de rigidification 11 revêtu d'une couche de revêtement 19 qui peut notamment être analogue au revêtement de la coiffe de manière à assurer une continuité visuelle.

Selon la réalisation représentée, le volet 10 est associé - ici par couture - par son premier bord 12 à la coiffe 7.

Selon une variante non représentée, la couche 19 est issue de la coiffe 7.

De façon non visible sur les figures, le volet 10 s'appuie en périphérie de l'ouverture 9 par son bord supérieur 17.

Le lien élastique 18 est notamment associé par couture selon ses deux extrémités.

Selon la réalisation représentée, le dispositif 4 comprend un carter 15 latéral, ledit carter présentant une bordure 16 dont la géométrie est agencée pour permettre un glissement du volet 10 contre ladite bordure et une ouverture dudit volet vers l'extérieur du dossier 3 lors de son rabattement.

On décrit à présent un coussin 5 de dossier 3 d'un siège 1, ledit coussin comprenant un bloc 6 de mousse de rembourrage revêtu d'une coiffe 7 de revêtement, ledit coussin comprenant une cavité 8 latérale inférieure de logement d'un dispositif 4 d'articulation, ladite cavité étant pourvue d'une ouverture 9 d'introduction dudit dispositif dans ladite cavité, ladite ouverture étant occultée par un volet d'occultation 10 comprenant un premier bord 12 d'articulation - ici sensiblement vertical - et un deuxième bord 13 opposé, ledit coussin comprenant en outre un lien élastique 18 de rappel dudit volet en fermeture, ledit deuxième bord définissant avec ladite coiffe une fente 14 en l'absence de mise en contrainte dudit volet.

On décrit enfin un procédé de réalisation d'un coussin 5 comprenant les étapes suivantes :
- confectionner une coiffe 7 pourvue d'un volet 10 latéral inférieur pourvu d'un insert de rigidification 11, ledit volet comprenant un premier bord 12 d'articulation et un deuxième bord 13 opposé définissant avec ladite coiffe une fente 14, ledit coussin comprenant en outre un lien élastique 18 de rappel dudit volet en fermeture,
- disposer ladite coiffe dans un moule,
- injecter dans ladite coiffe un mélange précurseur de mousse souple,
- après expansion de la mousse, démouler le coussin 5 obtenu.

## Revendications

1. Siège (1) de véhicule automobile comprenant une assise (2) et un dossier (3) monté en rotation par un dispositif (4) d'articulation, ledit dispositif étant agencé pour permettre le rabattement dudit dossier en position sensiblement horizontale contre ladite assise, ledit dispositif saillant de ladite assise vers le haut lorsque ledit dossier est rabattu, ledit dossier comprenant un coussin (5) de garniture, ledit coussin comprenant un bloc (6) de mousse de rembourrage revêtu d'une coiffe (7) de revêtement, ledit siège étant **caractérisé en ce que** ledit coussin comprend une cavité (8) latérale inférieure de logement dudit dispositif lorsque ledit dossier est rabattu, ladite cavité étant pourvue d'une ouverture (9), tournée vers l'avant, d'introduction dudit dispositif dans ladite cavité lors du rabattement dudit dossier, ladite ouverture étant pourvue d'un volet (10) d'occultation comprenant un premier bord (12) d'articulation et un deuxième bord (13) opposé, ledit coussin comprenant en outre un lien élastique (18) de rappel dudit volet en fermeture, ledit volet étant mobile entre :
• une première position correspondant au non rabattement dudit dossier où ledit volet occulte ladite ouverture sous l'action dudit lien, au moins une partie de la périphérie dudit volet s'appuyant en périphérie de ladite ouverture, ledit deuxième bord définissant avec ladite coiffe une fente (14),
• et une deuxième position correspondant au rabattement dudit dossier où ledit volet est ouvert par appui dudit dispositif contre lui, à l'encontre de la force de rappel exercée par ledit lien, ledit deuxième bord s'écartant pour ouvrir ladite fente.

2. Siège selon la revendication 1, **caractérisé en ce que** le volet (10) comprend un insert de rigidification (11) revêtu d'une couche de revêtement (19).

3. Siège selon la revendication 2, **caractérisé en ce que** le volet (10) est associé par son premier bord (12) à la coiffe (7).

4. Siège selon l'une quelconque des revendications 1 à 3, **caractérisé en ce que** le volet (10) s'appuie en périphérie de l'ouverture (9) par son bord supérieur (17).

5. Siège selon l'une quelconque des revendications 1 à 4, **caractérisé en ce que** le dispositif (4) comprend un carter (15) latéral, ledit carter présentant une bordure (16) dont la géométrie est agencée pour permettre un glissement du volet (10) contre ladite bordure et une ouverture dudit volet vers l'extérieur du dossier (3) lors de son rabattement.

6. Coussin (5) de dossier (3) d'un siège selon l'une quelconque des revendications 1 à 5, comprenant un bloc (6) de mousse de rembourrage revêtu d'une coiffe (7) de revêtement, **caractérisé en ce qu'**il comprend une cavité (8) latérale inférieure de logement d'un dispositif (4) d'articulation, ladite cavité étant pourvue d'une ouverture (9) d'introduction dudit dispositif dans ladite cavité, ladite ouverture étant occultée par un volet d'occultation (10) comprenant un premier bord (12) d'articulation et un deuxième bord (13) opposé, ledit coussin comprenant en outre un lien élastique (18) de rappel dudit volet en fermeture, ledit deuxième bord définissant avec ladite coiffe une fente (14) en l'absence de mise en contrainte dudit volet.

7. Procédé de réalisation d'un coussin selon la revendication 6 lorsqu'elle se rattache à la revendication 3, **caractérisé en ce qu'**il comprend les étapes suivantes :
• confectionner une coiffe (7) pourvue d'un volet (10) latéral inférieur pourvu d'un insert de rigidification (11), ledit volet comprenant un premier bord (12) solidaire de ladite coiffe et un deuxième bord (13) opposé définissant avec ladite coiffe une fente (14), ledit coussin comprenant en outre un lien élastique (18) de rappel dudit volet en fermeture,
• disposer ladite coiffe dans un moule,
• injecter dans ladite coiffe un mélange précurseur de mousse souple,
• après expansion de la mousse, démouler le coussin (5) obtenue.
